# EUROPEAN PATENT SPECIFICATION

(11) **EP 2 508 247 B1**
(45) Date of publication and mention of the grant of the patent: **31.12.2014**
(21) Application number: 11161573.8
(22) Date of filing: 07.04.2011
(51) Int. Cl.: B01D 63/08

(54) **Method and apparatus for making a filtering unit**
Verfahren und Vorrichtung zur Herstellung einer Filtereinheit
Procédé et appareil pour fabriquer une unité filtrante

(43) Date of publication of application: 10.10.2012
(73) Proprietor: New Century Membrane Technology Co., Ltd., Taichung City (TW)
(72) Inventor: Kuo, Chi-Chang, Taichung City (TW)
(74) Representative: Lang, Christian

(56) References cited:
- WO-A2-99/36150
- FR-A1- 2 703 925
- US-A- 5 180 459
- US-A1- 2009 127 178

## Description

### BACKGROUND OF INVENTION

### 1. FIELD OF INVENTION

The present invention relates to a method and apparatus for making a filtering unit.

### 2. RELATED PRIOR ART

As disclosed in U. S. Patent No. 7575678 a portable water purification device includes a base, a fixed sleeve, a tube, a filtering unit, and a movable sleeve. The base includes a channel for providing filtered liquid. The fixed sleeve is fixed on the base and includes a first peripheral wall and a first axial hole. The tube, on which the filtering unit is mounted, is secured on the base and held in the first axial hole to define an aperture in communication with the channel. The movable sleeve is mounted on an external surface of the fixed sleeve, and slid between a first position away from the base and a second position adjacent to the base. The movable sleeve includes a second peripheral wall and a second axial hole whereby the first axial hole communicates with the second axial hole to define a containing room when the movable sleeve is in the first position.

In the U. S. Patent the filtering unit includes a screen sandwiched between two permeable membranes. The screen and the membranes are cut from substrates. Water-proof adhesive is provided along the edge of each of the screen and the membranes. Then the screen and the membranes are located in a mold in which they are pressed. After the curing of the adhesive, the screen and the membranes become a laminate. Then, the laminate is punched with an aperture. Thus, the filtering unit is made. It however takes a lot of time for the adhesive to cure, and this is undesirable for massive production.

To expedite the production of the filtering unit, ultrasonic welding is used to bond the overlapped screen and membranes along the edges. Then, a knife is used to cut the bonded screen and membrane with an aperture. It is however difficult to execute the ultrasonic welding on the overlapped screen and membranes at one step where the edges are long. In general, each of the edges is divided into to three sections of marginally larger than 120 degrees, and the ultrasonic welding is executed at three steps. To make the edge well water-proof, ultrasonic welding is executed twice on a small portion of each of the edges between any two adjacent ones of the sections of each of the edges. Repeated ultrasonic welding would however cause excessive heating that would damage or deform the surface of the filtering unit. Such excessive heating would even make invisible but harmful slits in the filtering unit. Therefore, the yield is not satisfactory, and this is a heavy burden on quality control. Moreover, it requires a lot of laboring to execute the three-stepped ultrasonic welding, and this is hence expensive.

The present invention is therefore intended to obviate or at least alleviate the problems encountered in prior art.

A further conventional method and apparatus for producing a filtering unit, which consists of a stack of microporous membranes made of plastic (16) welded together at their periphery, is described by FR 2 703 925 A1.

### SUMMARY OF INVENTION

It is an objective of the present invention to provide an efficient method for making a reliable filtering unit at a high yield. This object is solved by the method for making a disk-shaped filtering unit according to claim 1. Advantageous improvements of the method are described by the corresponding dependent claims.

To achieve the foregoing objective, in the method there is provided a laminate by sandwiching a screen-related substrate between two permeable membrane-related substrates. There is provided a machine with a conveying unit, a hot-pressing unit and a punching unit. The conveying unit is used to convey the laminate. The hot-pressing unit is used to hot-press and weld the laminate dot by dot to bond the substrates along a closed curve eventually, thus making a semi-product of the filtering unit out of a portion of the laminate within the closed curve. There is made a final product of the filtering unit by using the punching unit to punch the semi-product with an aperture.

It is another objective of the present invention to provide an efficient apparatus for making a reliable filtering unit at a high yield. This object is solved by the apparatus for making a disk-shaped filtering unit according to claim 5. Advantageous improvements of the apparatus are described by the corresponding dependent claims.

To achieve the foregoing objective, the apparatus includes a conveying unit, a hot-pressing unit and a punching unit. The conveying unit conveys a laminate including a screen-related substrate sandwiched between two membrane-related substrates. The hot-pressing unit hot-presses and welds the laminate dot by dot to bond the substrates along a closed curve eventually, thus making a semi-product of the filtering unit out of a portion of the laminate within the closed curve. The punching unit punches the semi-product with an aperture, thus making a final product of the filtering unit.

Other objectives, advantages and features of the present invention will be apparent from the following description referring to the drawings.

### BRIEF DESCRIPTION OF DRAWINGS

The present invention will be described via detailed illustration of the preferred embodiment referring to the drawings, where:
Figure 1 is a flow chart of an efficient method for making a reliable filtering unit at a high yield according to the preferred embodiment of the present invention;
Figure 2 is a side view of an apparatus for making a reliable filtering unit according to the method shown in Figure 1;
Figure 3 is a perspective view of a hot-pressing unit of the apparatus shown in Figure 2;
Figure 4 is a top view of a filtering unit made with the apparatus shown in Figure 2 and Figure 3 according to the method shown in Figure 1; and
Figure 5 is a cross-sectional view of the filtering unit shown in Figure 4.

### DETAILED DESCRIPTION OF PREFERRED EMBODIMENT

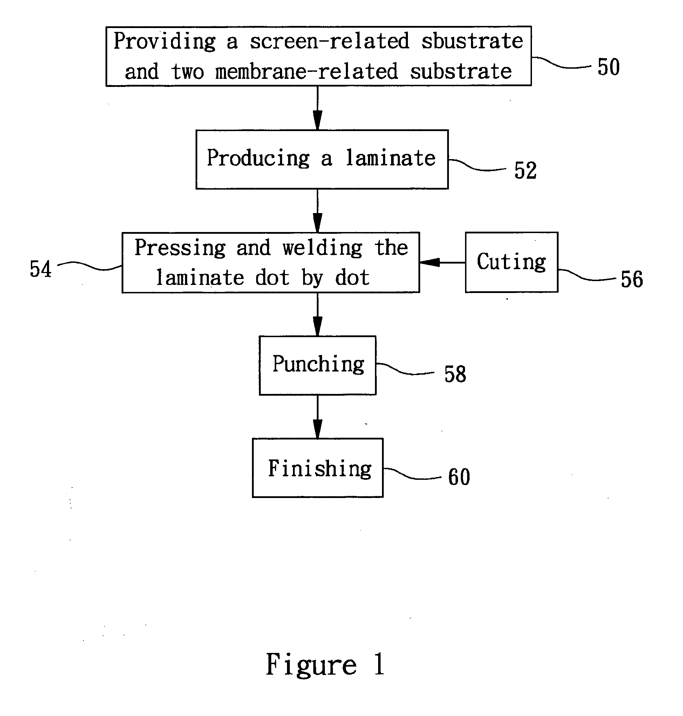

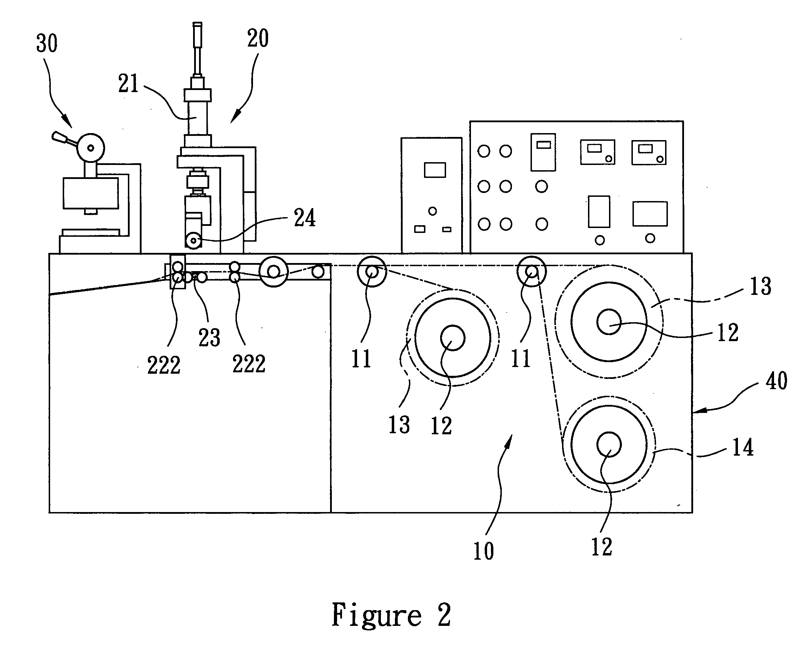

Referring to Figure 1, there is shown an efficient method for making a reliable filtering unit at a high yield according to the preferred embodiment of the present invention. Referring to Figure 2, there is shown an apparatus for making the filtering unit according to the method shown in Figure 1. The apparatus includes a conveying unit 10, a hot-pressing unit 20 and a punching unit 30. The units 10, 20 and 30 are arranged on a table 40.

The conveying unit 10 includes first and second conveying rollers 11 and first, second and third axles 12. The conveying rollers 11 and the axles 12 are located in proper positions on the table 40.

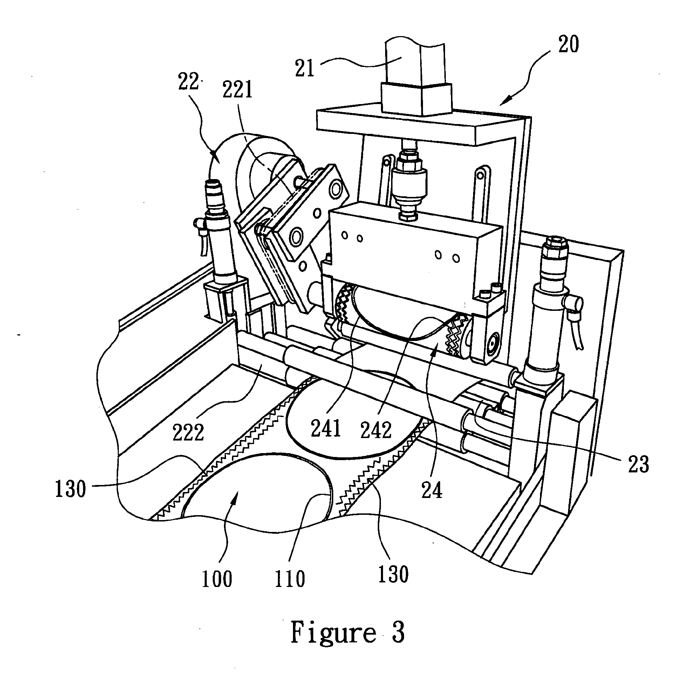

Referring to Figures 2 and 3, the hot-pressing unit 20 includes a pneumatic cylinder 21, a transmission 22, a heater 23 and a pressing roller 24. Transferring rollers 222 are located in proper positions on the table 40. The pneumatic cylinder 21 is located in a proper position on the table 40. The transmission 22 is used to transmit power to the pressing roller 24 from the pneumatic cylinder 21 so that the pressing roller 24 is movable toward and from the transferring rollers 222. The transmission 22 includes a chain 221 and toothed wheels. The heater 23 is operable based on ultrasonic welding or high-frequency welding.

The pressing roller 24 includes a primary pattern 241 located between two secondary patterns 242. The pattern 241 and 242 protrude from the periphery of the pressing roller 24. The primary pattern 241 is shaped corresponding to a closed curve. The secondary patterns 242 are shaped corresponding to a line.

The punching unit 30 is located in a proper position on the table 40.

According to the method, at 50, a first membrane-related substrate 13 is provided in a roll wound around a reel supported on the first axle 12. A second membrane-related substrate 13 is provided in a roll wound around a reel supported on the second axle 12. A screen-related substrate 14 is provided in a roll wound around a reel supported on the third axle 12.

At 52, a laminate is produced by sandwiching the screen-related substrate 14 between the first and second membrane-related substrates 13. In detail, the first membrane-related substrate 13 is reeled out from the reel supported on the first axle 12 and conveyed to the first conveying roller 11. The second membrane-related substrate 13 is reeled out from the reel supported on the second axle 12 and conveyed to the second conveying roller 11. The screen-related substrate 14 is reeled out from the reel supported on the third axle 12 and conveyed to the first conveying roller 11. The screen-related substrate 14 and the first membrane-related substrate 13 are overlapped on the first conveying roller 11 before they are conveyed to the second conveying roller 11. The screen-related substrate 14 is sandwiched between the first and second membrane-related substrates 13 on the second conveying roller 11. Thus, the laminate is produced. The laminate is sent to the hot-pressing unit 20 from the conveying unit 10.

At 54, the laminate is hot-pressed. In detail, the pressing roller 24 presses the laminate against some of the transferring rollers 222 while the heater 23 heats the laminate. As the pressing roller 24 rolls, the primary pattern 241 presses the laminate against the transferring rollers 222 while the secondary patterns 242 press the laminate against the transferring rollers 222. The primary pattern 241 welds the laminate dot by dot. The primary pattern 241 bonds the substrates 13 and 14 along a closed curve 110 eventually. The closed curve 110 is preferably a circuit. Thus, a portion of the laminate within the closed curve 110 is made a semi-product of the filtering unit 100. The secondary patterns 242 weld the laminate dot by dot. The secondary patterns 242 bond the substrates 13 and 14 along a closed curve 110 along two lines 130 eventually. The lines 130 are preferably zigzag lines. Therefore, the integrity of the laminate is improved during the conveying.

At 56, the semi-product can be cut from the laminate while the laminate is hot-pressed. This can be achieved by providing tiny teeth along the primary pattern 241. The tiny teeth can cut the semi-product from the laminate.

At 58, the punching unit 30 is used to punch the semi-product with an aperture 120.

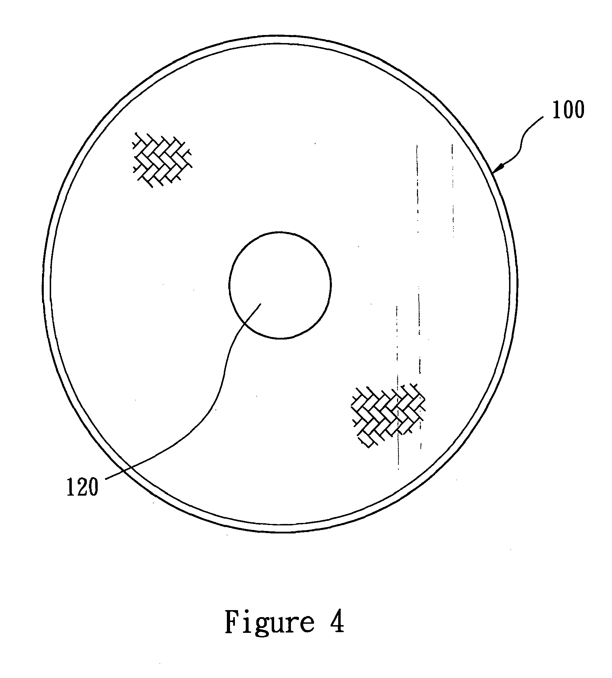

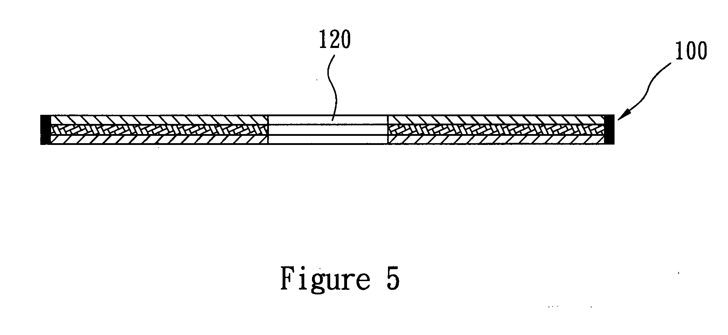

At 60, a final product of the filtering unit 100 is made as clearly shown in Figure 4 and Figure 5.

The method and apparatus of the present invention exhibits several advantages. Firstly, the production of the filtering unit is fast and inexpensive. This is because the production of the filtering unit is automatic without requiring much laboring.

Secondly, the consumption of energy is low. This is because heat is provided to the laminate within a small area at any time, and little heat would be dissipated.

Thirdly, the resultant filtering unit is reliable. This is because the welding is executed dot by dot without repeated welding that would cause excessive heating that would damage the resultant filtering unit.

## Claims

1. A method for making a disk-shaped filtering unit, the method comprising the steps of:
providing a laminate by sandwiching a screen-related substrate (14) between two membrane-related substrates (13);
providing a machine with a conveying unit (10), a hot-pressing unit (20) and a punching unit (30);
using the conveying unit (10) to convey the laminate;
using the hot-pressing unit (20) to hot-press and weld the laminate dot by dot and bond the substrates (13, 14) along a closed curve (110) eventually, thus making a semi-product of the filtering unit (100) out of a portion of the laminate within the closed curve (110); and
making a final product of the filtering unit (100) by using the punching unit (30) to punch the semi-product with an aperture (120).

2. The method according to claim 1, wherein the step of using the hot-pressing unit (20) to hot-press the laminate includes the step of welding the laminate along two lines (130) for improving the integrity of the laminate during the conveying.

3. The method according to claim 1, wherein the step of using the hot-pressing unit (20) to hot-press the laminate includes the step of cutting the semi-product from the laminate.

4. The method according to claim 1, wherein the step of using the hot-pressing unit (20) to hot-press the laminate includes the step of using ultrasonic welding.

5. An apparatus for making a disk-shaped filtering unit, the apparatus comprising:
a conveying unit (10) for conveying a laminate including a screen-related substrate (14) sandwiched between two membrane-related substrates (13);
a hot-pressing unit (20) for hot-pressing and welding the laminate to bond the substrates (13, 14) along a closed curve (110) eventually, thus making a semi-product of the filtering unit (100) out of a portion of the laminate within the closed curve (110); and
a punching unit (30) for punching the semi-product with an aperture, thus making a final product of the filtering unit (100);
charactherized in that the hot-pressing unit (20) for hot-pressing and welding hot-presses and welds the laminate dot by dot to bond the substrates (13, 14) along a closed curve (110) eventually.

6. The apparatus according to claim 5, wherein the hot-pressing unit (20) includes:
transferring rollers (222) for conveying the laminate; and
a pressing roller (24) including a primary pattern (241) protruding from the periphery thereof corresponding to the closed curve (110), wherein the primary pattern (241) presses the laminate against some of the transferring rollers (222) dot by dot.

7. The apparatus according to claim 6, wherein the pressing roller (24) includes two secondary patterns (242) protruding from the periphery thereof, wherein the secondary patterns (242) press and weld the laminate against the transferring rollers (222) dot by dot to bond the substrates (13, 14) along two lines (130) eventually.

8. The apparatus according to claim 6, wherein the hot-pressing unit (20) includes a heater (23) located on a side of the laminate while the pressing roller (24) is located on an opposite side of the laminate.

9. The apparatus according to claim 6, wherein the hot-pressing unit (20) includes a pneumatic cylinder (21) and a transmission (22) for transmitting power to the pressing roller (24) from the pneumatic cylinder (21).

10. The apparatus according to claim 5, wherein the conveying unit (10) includes:
a first conveying roller (11) for conveying the screen-related substrate (14) and one of the membrane-related substrates (13); and
a second conveying roller (11) for conveying the laminate.

## Patentansprüche

1. Verfahren zur Herstellung einer scheibenförmigen Filtereinheit, umfassend die Schritte:
Bereitstellen eines Laminats, wobei sich ein siebartiges Substrat (14) zwischen zwei membranartigen Substraten (13) befindet,
Bereitstellen einer Maschine mit einer Fördereinheit (10), einer Heißpresseinheit (20) und einer Stanzeinheit (30),
Verwenden der Fördereinheit (10), um das Laminat zu transportieren,
Verwenden der Heißpresseinheit (20), um das Laminat heißzupressen und Punkt für Punkt zu verschweißen, um die Substrate (13, 14) letztendlich entlang einer geschlossenen Kurve (110) zu verbinden, sodass ein Halbzeug der Filtereinheit (100) aus einem Teil des Laminats innerhalb der geschlossenen Kurve (110) erhalten wird, und
Herstellung eines Endprodukts der Filtereinheit (100) durch Verwendung der Stanzeinheit (30), um das Halbzeug mit einem Ausschnitt (120) zu stanzen.

2. Verfahren nach Aspruch 1, wobei der Schritt zur Verwendung der Heißpresseinheit (20) zum Heißpressen des Laminats einen Schritt umfasst, bei dem das Laminat entlang zweier Linien (130) verschweißt wird, um die Beständigkeit des Laminats während des Transports zu verbessern.

3. Verfahren nach Anspruch 1, wobei der Schritt zur Verwendung der Heißpresseinheit (20) zum Heißpressen des Laminats einen Schritt umfasst, bei dem das Halbzeug aus dem Laminat geschnitten wird.

4. Verfahren nach Anspruch 1, wobei der Schritt zur Verwendung der Heißpresseinheit (20) zum Heißpressen des Laminats einen Schritt zum Ultraschallschweißen umfasst.

5. Vorrichtung zur Herstellung einer scheibenförmigen Filtereinheit mit:
einer Fördereinheit (10) zum Transport eines Laminats, welches ein siebartiges Substrat (14) umfasst, das sich zwischen zwei membranartigen Substraten (13) befindet,
einer Heißpresseinheit (20) zum Heißpressen und Schweißen des Laminats, um die Substrate (13, 14) letztendlich entlang einer geschlossenen Kurve (110) zu verbinden, sodass ein Halbzeug der Filtereinheit (100) aus einem Teil des Laminats innerhalb der geschlossenen Kurve (110) ausgebildet wird, und
einer Stanzeinheit (30) zum Stanzen des Halbzeugs mit einem Ausschnitt (120), sodass das Endprodukt der Filtereinheit (100) erhalten wird,
**dadurch gekennzeichnet, dass** die Heißpresseinheit (20) zum Heißpressen und Schweißen das Laminat heißpresst und Punkt für Punkt verschweißt, um die Substrate (13,14) letztendlich entlang einer geschlossenen Kurve (110) miteinander zu verbinden.

6. Vorrichtung nach Anspruch 5, wobei die Heißpresseinheit (20) umfasst:
Transferwalzen (222), um das Laminat zu transportieren, und
eine Anpresswalze (24), die eine Primärstruktur (241) aufweist, die von deren Außenseite hervorsteht und der geschlossenen Kurve (110) entspricht, wobei die Primärstruktur (241) das Laminat Punkt für Punkt gegen einige der Transferwalzen (222) drückt.

7. Vorrichtung nach Anspruch 6, wobei die Anpresswalze (24) zwei Sekundärstrukturen (242) aufweist, die von deren Außenseite hervorstehen, wobei die Sekundärstrukturen (242) das Laminat Punkt für Punkt gegen die Transferwalzen (222) drücken und verschweißen, um die Substrate (13, 14) letztendlich entlang zweier Linien (130) zu verbinden.

8. Vorrichtung nach Anspruch 6, wobei die Heißpresseinheit (20) einen Heizer (23) umfasst, der sich an einer Seite des Laminats befindet, während sich die Anpresswalze (24) an der gegenüberliegenden Seite des Laminats befindet.

9. Vorrichtung nach Anspruch 6, wobei die Heißpresseinheit (20) einen Pneumatikzylinder (21) und ein Getriebe (22) umfasst, welches die Kraft des Pneumatikzylinders (21) an die Anpresswalze (24) überträgt.

10. Vorrichtung nach Anspruch 5, wobei die Fördereinheit (10) umfasst:
eine erste Transportwalze (11) zum Transport des siebartigen Substrats (14) und eines der membranartigen Substrate (13), und
eine zweite Transportwalze (11) zum Transport des Laminats.

## Revendications

1. Procédé de fabrication d'une unité de filtration en forme de disque, le procédé comprenant les étapes de :
fourniture d'un laminé en mettant en sandwich un substrat d'écran (14) entre deux substrats de membrane (13),
fourniture d'une machine avec une unité de transport (10), une unité de pressage à chaud (20) et une unité d'estampage (30),
utilisation de l'unité de transport (10) pour transporter le laminé,
utilisation de l'unité de pressage à chaud (20) pour presser à chaud et souder le laminé point par point et coller les substrats (13, 14) le long d'une courbe fermée (110) finalement en fabriquant ainsi un demi-produit de l'unité de filtration (100) à partir d'une portion du laminé à l'intérieur de la courbe fermée (110) et
fabrication d'un produit final de l'unité de filtration (100) en utilisant l'unité d'estampage (30) pour estamper le demi-produit avec une ouverture (120).

2. Procédé selon la revendication 1, l'étape d'utilisation de l'unité de pressage à chaud (20) pour presser à chaud le laminé comprenant l'étape de souder le laminé le long de deux lignes (130) pour améliorer l'intégrité du laminé pendant le transport.

3. Procédé selon la revendication 1, l'étape d'utilisation de l'unité de pressage à chaud (20) pour presser à chaud le laminé comprenant l'étape de couper le demi-produit du laminé.

4. Procédé selon la revendication 1, l'étape d'utilisation de l'unité de pressage à chaud (20) pour presser à chaud le laminé comprenant l'étape d'utilisation du soudage ultrasonique.

5. Appareil pour la fabrication d'une unité de filtration en forme de disque, l'appareil comprenant :
une unité de transport (10) pour transporter un laminé qui comprend un substrat d'écran (14) mis en sandwich entre deux substrats de membrane (13),
une unité de pressage à chaud (20) pour presser à chaud et souder le laminé pour coller les substrats (13, 14) le long d'une courbe fermée (110) finalement en fabriquant ainsi un demi-produit de l'unité de filtration (100) à partir d'une portion du laminé à l'intérieur de la courbe fermée (110) et
une unité d'estampage (30) pour estamper le demi-produit avec une ouverture (120) en fabriquant un produit final de l'unité de filtration (100),
**caractérisé en ce que** l'unité de pressage à chaud (20) pour presser à chaud et souder presse à chaud et soude le laminé point par point pour coller finalement les substrats (13, 14) le long d'une courbe fermée (110).

6. Appareil selon la revendication 5, l'unité de pressage à chaud (20) comprenant :
des rouleaux de transfert (222) pour transporter le laminé et
un rouleau de pressage (24) comprenant un modèle primaire (241) qui fait saillie de la périphérie de celui-ci correspondant à la courbe fermée (110), le modèle primaire (241) pressant le laminé contre quelques-uns des rouleaux de transfert (222) point par point.

7. Appareil selon la revendication 6, le rouleau de pressage (24) comprenant deux modèles secondaires (242) qui font saillie de la périphérie de celui-ci, les modèles secondaires (242) pressant et soudant le laminé contre les rouleaux de transfert (222) point par point pour coller finalement les substrats (13, 14) le long de deux lignes (130).

8. Appareil selon la revendication 6, l'unité de pressage à chaud (20) comprenant un chauffage (23) situé sur un côté du laminé tandis que le rouleau de pressage (24) est situé sur un côté opposé du laminé.

9. Appareil selon la revendication 6, l'unité de pressage à chaud (20) comprenant un cylindre pneumatique (21) et une transmission (22) pour transmettre de l'énergie au rouleau de pressage (24) à partir du cylindre pneumatique (21).

10. Appareil selon la revendication 5, l'unité de transport (10) comprenant :
un premier rouleau de transport (11) pour transporter le substrat d'écran (14) et l'un des substrats de membrane (13) et
un second rouleau de transport (11) pour transporter le laminé.
